# EUROPÄISCHE PATENTANMELDUNG

(11) **EP 1 705 770 A1**
(43) Veröffentlichungstag der Anmeldung: **27.09.2006**
(21) Anmeldenummer: 05006120.9
(22) Anmeldetag: 21.03.2005
(51) Int. Cl.: H02G 11/00, F16G 13/16

(54) **Verfahren zum Betrieb einer Energieführungskette und Ablagerinne zur Durchführung des Verfahrens**

(71) Anmelder: ekd gelenkrohr GmbH, 40699 Erkrath (DE)
(72) Erfinder: Klein, Ernst, 40625 Düsseldorf (DE)
(74) Vertreter: Albrecht, Rainer Harald

(57) **Zusammenfassung**

Die Erfindung betrifft ein Verfahren zum Betrieb einer Energieführungskette mit einem unterseitig abgestützten, ruhenden ersten Kettenstrang (5), einem in Kettenlängsrichtung sich bewegenden zweiten Kettenstrang (6) und einem die beiden Kettenstränge verbindenden Kettenbogen (7). Der Kettenbogen (7) führt bei einer Bewegung des zweiten Kettenstranges (6) eine Rollbewegung entlang einer durch die Bewegung vorgegebenen Strecke aus, wobei sich die Länge der beiden Kettenstränge entsprechend der Position des Kettenbogens ändert. Erfindungsgemäß werden der ruhende Kettenstrang (5) und der bewegte Kettenstrang (6) seitlich versetzt nebeneinander auf Flächen abgelegt, wobei der seitliche Versatz (S) zwischen den Längsachsen der Kettenstränge zumindest so groß ist wie die Kettenbreite (B) eines Kettenstranges. Gegenstand der Erfindung ist auch eine Ablagerinne (10) zur Durchführung des beschriebenen Verfahrens. - Fig. 2

## Beschreibung

Die Erfindung betrifft ein Verfahren zum Betrieb einer aus beweglich verbundenen Gliedern bestehenden Energieführungskette.

Eine Energieführungskette ist einseitig krümmbar und dient der Führung sowie dem Schutz von energieführenden Leitungen, z. B. Kabeln, Hydraulik- oder Pneumatikschläuchen und dergleichen von einem maschinenfesten oder ortsfesten Anschlusspunkt zu einem anderen Anschlusspunkt, der an ein bewegliches Maschinenteil angeschlossen wird und im Betrieb in Kettenlängsrichtung ortsveränderbar ist. Eine solche Energieführungskette weist einen unterseitig abgestützten, ruhenden ersten Kettenstrang, einen in Kettenlängsrichtung sich bewegenden zweiten Kettenstrang und einen die beiden Kettenstränge verbindenden Kettenbogen auf, wobei der Kettenbogen bei einer Bewegung des zweiten Kettenstranges eine Rollbewegung entlang einer durch die Bewegung vorgegebenen Strecke ausführt und sich die Länge der beiden Kettenstränge entsprechend der Position des Kettenbogens ändert. Eine solche Energieführungskette ist beispielsweise aus DE 37 09 740 A1 bekannt.

Im Rahmen der bekannten Maßnahmen fluchten das feststehende Anschlussende und das bewegliche Anschlussende der Kette in Kettenlängsrichtung, so dass die beiden Kettenstränge der Energieführungskette übereinander in einer Vertikalebene angeordnet sind. Zumindest bei größeren Kettenlängen wird die Energieführungskette in eine Ablagerinne eingelegt, in der die beiden Kettenstränge übereinander geführt werden. Die Ablagerinne ist nur unwesentlich breiter als die Breite eines Kettenstranges. Die Führung einer Energieführungskette in einer Ablagerinne ist beispielsweise in der Firmendruckschrift der ekd gelenkrohr GmbH, "Kolibri: Führungsrinnen" Ausgabe 2/98 beschrieben.

Obwohl eine Energieführungskette eine selbsttragende Kette ist, ist ein Durchhängen des sich in Kettenlängsrichtung bewegenden oberen Kettenstranges bei größeren Kettenlängen unvermeidbar. Bei großen Kettenlängen liegt dann der zweite, in Kettenlängsrichtung sich bewegende Kettenstrang zumindest abschnittsweise auf dem unteren, ruhenden Kettenstrang auf. Der Lauf der Energieführungskette in den aufeinanderliegenden Abschnitten ist jedoch unbefriedigend. Hieran ändert sich auch wenig, wenn an den Kettengliedern Gleitschuhe mit ebenen Gleitflächen befestigt werden (DE 39 28 236 C1) oder Kettenglieder verwendet werden, an deren Kettenlaschen Rollen gelagert sind (EP 1 076 784 B1).

Aus EP 1 201 963 B1 ist eine Energieführungskette mit Führungsrollen bekannt, wobei die Führungsrollen des oberen, in Kettenlängsrichtung sich bewegenden Kettenstranges auf durchgehenden, ortsfesten Laufflächen abrollen und die Spurbreite zwischen den auf der linken und rechten Kettenseite angeordneten Führungsrollen während der Fahrbewegung der Kette verändert wird. Die bekannte Anordnung ermöglicht zwar einen ruhigen Lauf der Energieführungskette auch bei großen Kettenlängen, ist jedoch konstruktiv aufwendig und nur bei verhältnismäßig breiten Ketten technisch realisierbar.

Der Erfindung liegt die Aufgabe zugrunde, ein Verfahren zum Betrieb einer Energieführungskette anzugeben, mit dem auf möglichst einfache Weise ein ruhiger Lauf der Energieführungskette bei großen Kettenlängen möglich ist.

Gegenstand der Erfindung und Lösung dieser Aufgabe ist ein Verfahren gemäß Anspruch 1. Erfindungsgemäß werden der ruhende Kettenstrang und der bewegte Kettenstrang einer aus beweglich verbundenen Kettengliedern bestehenden Energieführungskette seitlich versetzt nebeneinander auf Flächen abgelegt, wobei der seitliche Versatz zwischen den Längsachsen der Kettenstränge zumindest so groß ist wie die Kettenbreite eines Kettenstranges. Zweckmäßig wird der seitliche Versatz etwas größer gewählt als die Kettenbreite eines Kettenstranges. Das feste Anschlussende der Energieführungskette und das bewegliche Anschlussende der Energieführungskette sind in Kettenlängsrichtung mit einem entsprechend großen seitlichen Versatz zueinander ausgerichtet. Durch den seitlichen Versatz der Kettenenden wird auf die Energieführungskette eine Querlast ausgeübt, die dazu führt, dass der Kettenbogen sich schräg stellt und der sich in Kettenlängsrichtung bewegende Kettenstrang in einer zu dem ruhenden ersten Kettenstrang parallelen Spur abgelegt wird. Ausgenutzt wird hierbei ein stets vorhandenes geringes Spiel zwischen den Gelenkverbindungen der Kettenglieder oder eine Deformierbarkeit der Kettenglieder. Es resultiert ein außergewöhnlich ruhiger und verschleißarmer Lauf der Energieführungskette. Die Kettenstränge können in separaten Rinnen oder in einer zweispurigen Rinne abgelegt und geführt werden. Es ist nicht erforderlich, dass die Kettenstränge auf ihrer gesamten Länge in Rinnen geführt werden. Bereiche, in denen keine seitlichen Führungen vorhanden sind, sind unschädlich. Die Rinnen können in Anpassung an örtliche Gegebenheiten auch einen leicht bogenförmigen Verlauf aufweisen. Gemäß einer bevorzugten Ausführung der Erfindung werden der ruhende Kettenstrang und der bewegte Kettenstrang parallel versetzt nebeneinander abgelegt. Abweichungen von der Parallelität sind jedoch im Rahmen des erfindungsgemäßen Verfahrens unkritisch.

Die nebeneinander auf Flächen liegenden Kettenstränge müssen nicht auf gleichem Niveau angeordnet sein. Im Rahmen der Erfindung liegt es, dass der bewegte Kettenstrang auf einer Fläche abgelegt wird, die höher angeordnet ist als die Ablagefläche für den ruhenden Kettenstrang, wobei der Niveauunterschied maximal dem Innendurchmesser des Kettenbogens entspricht. Gemäß einer bevorzugten Ausführung der Erfindung werden die Flächen für die Ablage des ruhenden Kettenstranges und zum unterseitigen Abstützen des bewegten Kettenstranges jedoch im Wesentlichen auf gleichem Niveau angeordnet.

Die angestrebte parallel versetzte Ablage der beiden Kettenstränge kann dadurch unterstützt werden, dass der ruhende Kettenstrang auf einer Fläche abgelegt wird, die zur Stützfläche des bewegten Kettenstranges geneigt ist. Der Neigungswinkel wird dabei so eingerichtet, dass der Kettenbogen die gewünschte Ausrichtung erhält, ohne jedoch zu kippen. Der Neigungswinkel ist abhängig von der Größe der Kettenglieder und insbesondere dem Durchmesser des Kettenbogens. Der Neigungswinkel ist anhand weniger orientierender Versuche an die vorgegebene Kettengeometrie anpassbar.

Das erfindungsgemäße Verfahren eignet sich besonders für eine Energieführungskette aus Kunststoffkettengliedern, die aus zwei seitlichen Kettenlaschen und die Kettenlaschen verbindenden Querstegen bestehen. Um den Reibungswiderstand zu reduzieren kann auch eine Energieführungskette mit Rollen oder Gleitschuhen verwendet werden, wobei die Rollen bzw. Gleitschuhe an der Auflageseite des sich in Kettenlängsrichtung bewegenden Kettenstranges angeordnet sind. Da die Rollen oder Gleitschuhe auf einer ebenen Bodenfläche, z. B. dem Boden einer Ablagerinne aufliegen, ist ein ruhiger Lauf der Energieführungskette gewährleistet.

Die beiden Kettenstränge der Energieführungskette können in separaten, mit seitlichem Versatz angeordneten Ablagerinnen geführt werden. Eine bevorzugte Ausführung sieht vor, dass die Energieführungskette in einer doppelspurigen Ablagerinne geführt wird. Gegenstand der Erfindung ist daher auch eine Ablagerinne für eine aus beweglich verbundenen Gliedern bestehenden Energieführungskette zur Durchführung des Verfahrens gemäß Anspruch 8.

Die erfindungsgemäße Ablagerinne für einen zweispurigen Betrieb der Energieführungskette weist einen Rinnenboden und Seitenwände auf, wobei der Abstand zwischen den Seitenwänden mindestens der zweifachen Breite eines Kettenstranges der Energieführungskette entspricht, so dass der ruhende Kettenstrang und der in Kettenlängsrichtung sich bewegende Kettenstrang der Energieführungskette in zwei Spuren nebeneinander auf dem Rinnenboden ablegbar sind, und wobei zwischen den Spuren ein Mittelsteg vorgesehen ist. Vorzugsweise ist der Abstand zwischen den Seitenwänden größer als die zweifache Breite eines Kettenstranges. Der Mittelsteg ist vorzugsweise niedriger als die Seitenwände und niedriger als die Laschenhöhe der Kettenglieder.

Gemäß einer bevorzugten Ausführung der Erfindung weist der Rinnenboden eine horizontale Bodenfläche für die Auflage des sich bewegenden Kettenstranges und eine zum Mittelsteg geneigte Bodenfläche für die Ablage des ruhenden Kettenstranges auf.

Die Rinne ist ferner zweckmäßig als Strangformteil ausgebildet und weist an den Stirnflächen der Seitenwände und des Mittelsteges Zentrierungsöffnungen für Steckverbindungselemente auf. Rinnen mit einer vorgegebenen Standardlänge können zu beliebig langen Führungen verbunden werden.

Im Folgenden wird die Erfindung anhand einer lediglich ein Ausführungsbeispiel darstellenden Zeichnung erläutert. Es zeigen schematisch:

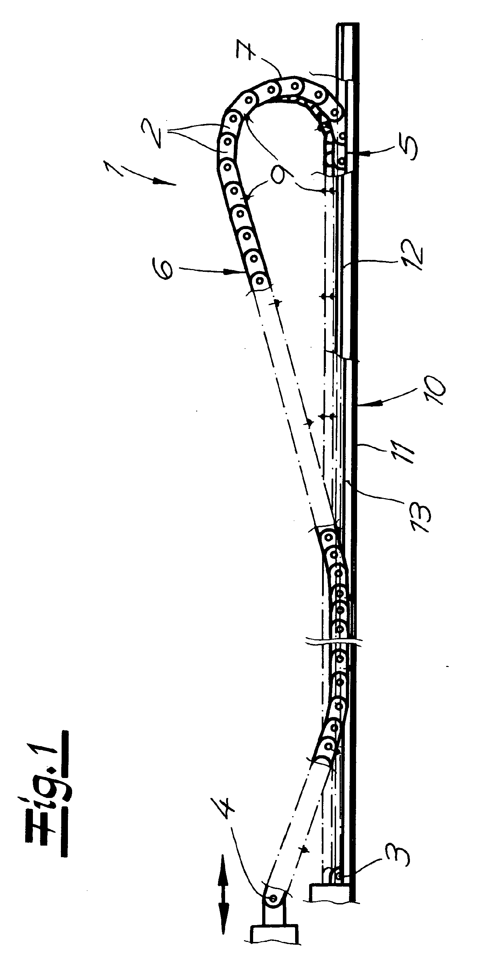

- **Fig. 1**: ausschnittsweise eine Seitenansicht auf eine nach dem erfindungsgemäßen Verfahren betriebene Energieführungskette,
- **Fig. 2**: einen Querschnitt durch die erfindungsgemäß betriebene Energieführungskette und
- **Fig. 3**: einen Querschnitt durch eine Ablagerinne zur Durchführung des erfindungsgemäßen Verfahrens.

Die in den Figuren dargestellte Energieführungskette 1 ist aus gelenkig verbundenen Kunststoffkettengliedern 2 zusammengesetzt, die jeweils aus zwei seitlichen Kettenlaschen und die Kettenlaschen verbindenden Querstegen bestehen. Die Energieführungskette 1 ist einseitig krümmbar und dient der Führung von energieführenden Leitungen, z. B. von Kabeln, Schläuchen und dergleichen, von einem ortsfesten oder maschinenfesten Anschlusspunkt 3 zu einem ortsveränderbaren Anschlusspunkt 4. Bei dem ortsveränderbaren Anschlusspunkt 4 handelt es sich beispielsweise um einen Anschluss an einer in Kettenlängsrichtung hin und her verfahrbaren Maschine oder Maschinenteil.

Die Energieführungskette 1 setzt sich aus einem unterseitig abgestützten, ruhenden ersten Kettenstrang 5, einem in Kettenlängsrichtung sich bewegenden zweiten Kettenstrang 6 und einem die beiden Kettenstränge verbindenden Kettenbogen 7 zusammen. Der Kettenbogen 7 führt bei einer Bewegung des zweiten Kettenstranges 6 eine Rollbewegung entlang einer durch die Bewegung vorgegebenen Strecke aus, wobei sich die Länge der beiden Kettenstränge 5, 6 entsprechend der Position des Kettenbogens 7 ändert. Obwohl es sich bei der Energieführungskette 1 um eine selbsttragende Kette handelt, hängt der in Kettenlängsrichtung sich bewegende zweite Kettenstrang 6 aufgrund der zunehmenden Biegebeanspruchung durch und liegt zumindest abschnittsweise auf einer Fläche auf.

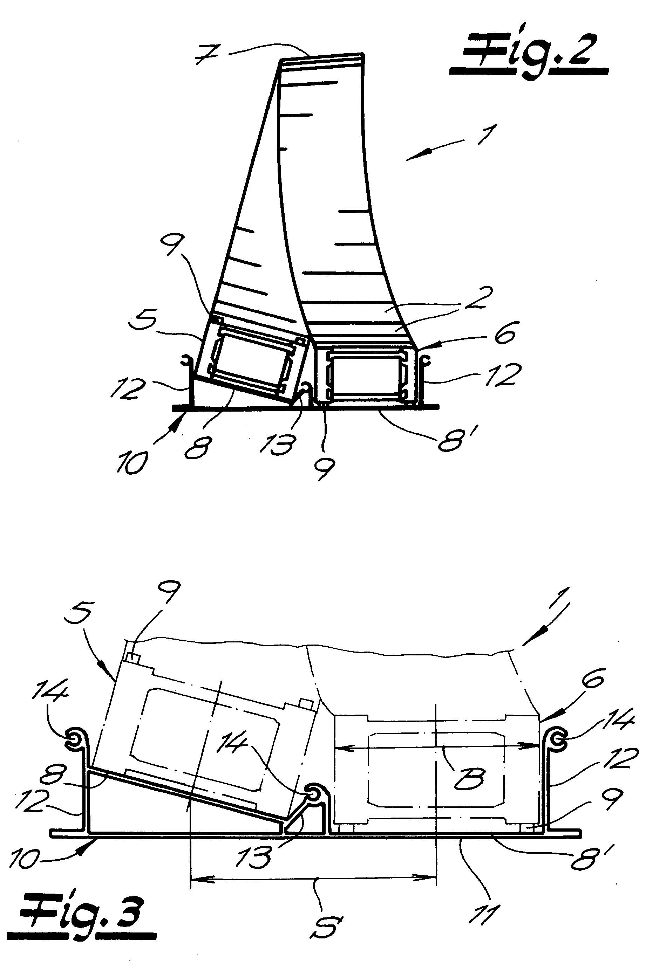

Insbesondere der Fig. 2 entnimmt man, dass der ruhende Kettenstrang 5 und der bewegte Kettenstrang 6 seitlich versetzt nebeneinander auf Flächen 8, 8' abgelegt werden, wobei der seitliche Versatz S zwischen den Längsachsen der Kettenstränge größer ist als die Kettenbreite B eines Kettenstrangs. Die beiden Kettenstränge 5, 6 werden vorzugsweise parallel versetzt nebeneinander abgelegt. Die Ablage erfolgt auf gleichem oder unterschiedlichem Niveau. Im Ausführungsbeispiel und gemäß einer bevorzugten Ausführung der Erfindung wird der ruhende Kettenstrang 5 auf einer Fläche 8 abgelegt, die zur Stützfläche 8' des bewegten Kettenstranges geneigt ist. Durch die Neigung der dem ruhenden Kettenstrang 5 zugeordneten Ablagefläche 8 erhält der Kettenbogen 7 die gewünschte Ausrichtung, welche die parallel versetzte Ablage des bewegten Kettenstranges 6 unterstützt.

Im Ausführungsbeispiel sind an der Auflageseite des sich in Kettenlängsrichtung bewegenden Kettenstranges 6 Rollen 9 oder Gleitschuhe angeordnet. Dabei ist es ausreichend, dass lediglich einige der Kettenglieder 2 mit Rollen 9 oder Gleitschuhen versehen werden.

Die Energieführungskette wird in einer zweispurigen Ablagerinne 10 geführt. Die Ablagerinne 10 weist einen Rinneboden 11 und Seitenwände 12 auf, wobei der Abstand zwischen den Seitenwänden 12 etwas größer ist als die zweifache Kettenbreite B eines Kettenstranges, so dass der ruhende Kettenstrang 5 und der in Kettenlängsrichtung sich bewegende Kettenstrang 6 der Energieführungskette in zwei Spuren nebeneinander auf dem Rinnenboden 11 ablegbar sind. Zwischen den Spuren ist ein Mittelsteg 13 vorgesehen. Den in den Fig. 2 und 3 dargestellten Ausführungsbeispielen entnimmt man, dass der Mittelsteg 13 niedriger ist als die Seitenwände 12 sowie auch niedriger ist als die Laschenhöhe der Kettenglieder 2. Der Rinnenboden 11 weist eine horizontale Bodenfläche 8' für die Auflage des sich bewegenden Kettenstranges 6 und eine zum Mittelsteg 13 geneigte Bodenfläche 8 für die Ablage des ruhenden Kettenstranges 5 auf. Der Fig. 3 entnimmt man, dass die Ablagerinne 10 als Strangformteil ausgebildet werden kann. In den Stirnflächen der Seitenwände und des Mittelsteges sind zweckmäßig Zentrierungsöffnungen 14 für Steckverbindungselemente vorgesehen. Dadurch können die in Standardlängen gefertigten Ablagerinnen 10 zu beliebig langen Führungen verbunden werden.

## Patentansprüche

1. Verfahren zum Betrieb einer aus beweglich verbundenen Gliedern bestehenden Energieführungskette (1), die einen unterseitig abgestützten, ruhenden ersten Kettenstrang (5), einen in Kettenlängsrichtung sich bewegenden zweiten Kettenstrang (6) und einen die beiden Kettenstränge verbindenden Kettenbogen (7) aufweist, wobei der Kettenbogen (7) bei einer Bewegung des zweiten Kettenstranges (6) eine Rollbewegung entlang einer durch die Bewegung vorgegebenen Strecke ausführt und sich die Länge der beiden Kettenstränge (5, 6) entsprechend der Position des Kettenbogens (7) ändert, **dadurch gekennzeichnet, dass** der ruhende Kettenstrang (5) und der bewegte Kettenstrang (6) seitlich versetzt nebeneinander auf Flächen abgelegt werden, wobei der seitliche Versatz zwischen den Längsachsen der Kettenstränge zumindest so groß ist wie die Kettenbreite eines Kettenstranges.

2. Verfahren nach Anspruch 1, **dadurch gekennzeichnet, dass** der ruhende Kettenstrang (5) und der bewegte Kettenstrang (6) parallel versetzt nebeneinander abgelegt werden.

3. Verfahren nach Anspruch 1 oder 2, **dadurch gekennzeichnet, dass** die Flächen (8, 8') für die Ablage des ruhenden Kettenstranges (5) und zum unterseitigen Abstützen des bewegten Kettenstranges (6) auf gleichem Niveau angeordnet werden.

4. Verfahren nach Anspruch 1 oder 2, **dadurch gekennzeichnet, dass** der bewegte Kettenstrang (6) auf einer Fläche (8') abgelegt wird, die höher angeordnet ist als die Ablagefläche (8) für den ruhenden Kettenstrang (5), wobei der Niveauunterschied maximal dem Innendurchmesser des Kettenbogens (7) entspricht.

5. Verfahren nach einem der Ansprüche 1 bis 4, **dadurch gekennzeichnet, dass** der ruhende Kettenstrang (5) auf einer Fläche (8) abgelegt wird, die zur Stützfläche (8') für den bewegten Kettenstrang (6) geneigt ist.

6. Verfahren nach einem der Ansprüche 1 bis 5, **dadurch gekennzeichnet, dass** eine Energieführungskette (1) aus Kunststoffkettengliedern (2) verwendet wird, die aus zwei seitlichen Kettenlaschen und die Kettenlaschen verbindenden Querstegen bestehen.

7. Verfahren nach einem der Ansprüche 1 bis 6, **dadurch gekennzeichnet, dass** eine Energieführungskette (1) mit Rollen (9) oder Gleitschuhen verwendet wird, wobei die Rollen (9) bzw. Gleitschuhe an der Auflageseite des sich in Kettenlängsrichtung bewegenden Kettenstranges (6) angeordnet sind.

8. Ablagerinne für eine aus beweglich verbundenen Gliedern bestehende Energieführungskette zur Durchführung des Verfahrens nach einem der Ansprüche 1 bis 7 mit einem Rinnenboden (11) und Seitenwänden (12), **dadurch gekennzeichnet, dass** der Abstand zwischen den Seitenwänden (12) mindestens der zweifachen Kettenbreite (B) eines Kettenstranges der Energieführungskette (1) entspricht, so dass der ruhende Kettenstrang (5) und der in Kettenlängsrichtung sich bewegende Kettenstrang (6) der Energieführungskette in zwei Spuren nebeneinander auf dem Rinnenboden (11) ablegbar sind, und dass zwischen den Spuren ein Mittelsteg (13) vorgesehen ist.

9. Ablagerinne nach Anspruch 8, **dadurch gekennzeichnet, dass** der Mittelsteg (13) niedriger ist als die Seitenwände (12).

10. Ablagerinne nach Anspruch 8 oder 9, **dadurch gekennzeichnet, dass** der Mittelsteg (13) niedriger ist als die Laschenhöhe der Kettenglieder (2).

11. Ablagerinne nach einem der Ansprüche 8 bis 10, **dadurch gekennzeichnet, dass** der Rinnenboden (11) eine horizontale Bodenfläche (8') für die Auflage des sich bewegenden Kettenstranges (6) und eine zum Mittelsteg (13) geneigte Bodenfläche (8) für die Ablage des ruhenden Kettenstranges (5) aufweist.

12. Ablagerinne nach einem der Ansprüche 8 bis 11, **dadurch gekennzeichnet, dass** die Rinne als Strangformteil ausgebildet ist und an den Stirnflächen der Seitenwände (12) und des Mittelsteges (13) Zentrierungsöffnungen (14) für Steckverbindungselemente aufweist.

## Geänderte Patentansprüche

### Geänderte Patentansprüche gemäss Regel 86(2) EPÜ.

**1.** Verfahren zum Betrieb einer aus beweglich verbundenen Gliedern bestehenden Energieführungskette (1), die einen unterseitig abgestützten, ruhenden ersten Kettenstrang (5), einen in Kettenlängsrichtung sich bewegenden zweiten Kettenstrang (6) und einen die beiden Kettenstränge (5, 6) verbindenden Kettenbogen (7) aufweist, wobei der Kettenbogen (7) bei einer Bewegung des zweiten Kettenstranges (6) eine Rollbewegung entlang einer durch die Bewegung vorgegebenen Strecke ausführt und sich die Länge der beiden Kettenstränge (5, 6) entsprechend der Position des Kettenbogens (7) ändert, wobei der erste Kettenstrang (5) mit einem festen Anschlussende (3) und der zweite Kettenstrang (6) mit einem beweglichen Anschlussende (4) der Energieführungskette (1) in Kettenlängsrichtung mit einem seitlichen Versatz (S) zueinander ausgerichtet sind, wobei der seitliche Versatz (S) zwischen den Längsachsen der Kettenstränge (5, 6) zumindest so groß ist wie die Kettenbreite (B) eines Kettenstranges (5, 6) und wobei durch den seitlichen Versatz (S) auf die Energieführungskette (1) eine Querlast ausgeübt wird, die dazu führt, dass der Kettenbogen (7) sich schräg stellt, so dass der ruhende Kettenstrang (5) und der bewegte Kettenstrang (6) seitlich versetzt nebeneinander auf Flächen abgelegt werden.

**2.** Verfahren nach Anspruch 1, **dadurch gekennzeichnet, dass** der ruhende Kettenstrang (5) und der bewegte Kettenstrang (6) parallel versetzt nebeneinander abgelegt werden.

**3.** Verfahren nach Anspruch 1 oder 2, **dadurch gekennzeichnet, dass** die Flächen (8, 8') für die Ablage des ruhenden Kettenstranges (5) und zum unterseitigen Abstützen des bewegten Kettenstranges (6) auf gleichem Niveau angeordnet werden.

**4.** Verfahren nach Anspruch 1 oder 2, **dadurch gekennzeichnet, dass** der bewegte Kettenstrang (6) auf einer Fläche (8') abgelegt wird, die höher angeordnet ist als die Ablagefläche (8) für den ruhenden Kettenstrang (5), wobei der Niveauunterschied maximal dem Innendurchmesser des Kettenbogens (7) entspricht.

**5.** Verfahren nach einem der Ansprüche 1 bis 4, **dadurch gekennzeichnet, dass** der ruhende Kettenstrang (5) auf einer Fläche (8) abgelegt wird, die zur Stützfläche (8') für den bewegten Kettenstrang (6) geneigt ist.

**6.** Verfahren nach einem der Ansprüche 1 bis 5, **dadurch gekennzeichnet, dass** eine Energieführungskette (1) aus Kunststoffkettengliedern (2) verwendet wird, die aus zwei seitlichen Kettenlaschen und die Kettenlaschen verbindenden Querstegen bestehen.

**7.** Verfahren nach einem der Ansprüche 1 bis 6, **dadurch gekennzeichnet, dass** eine Energieführungskette (1) mit Rollen (9) oder Gleitschuhen verwendet wird, wobei die Rollen (9) bzw. Gleitschuhe an der Auflageseite des sich in Kettenlängsrichtung bewegenden Kettenstranges (6) angeordnet sind.

**8.** Anordnung mit einer Energieführungskette und einer Ablagerinne für die aus beweglich verbundenen Gliedern bestehende Energieführungskette zur Durchführung des Verfahrens nach einem der Ansprüche 1 bis 7 mit einem Rinnenboden (11) und Seitenwänden (12), **dadurch gekennzeichnet, dass** der Abstand zwischen den Seitenwänden (12) mindestens der zweifachen Kettenbreite (B) eines Kettenstranges der Energieführungskette (1) entspricht, so dass der ruhende Kettenstrang (5) und der in Kettenlängsrichtung sich bewegende Kettenstrang (6) der Energieführungskette in zwei Spuren nebeneinander auf dem Rinnenboden (11) ablegbar sind, und dass zwischen den Spuren ein Mittelsteg (13) vorgesehen ist.

**9.** Anordnung nach Anspruch 8, **dadurch gekennzeichnet, dass** der Mittelsteg (13) niedriger ist als die Seitenwände (12).

**10.** Anordnung nach Anspruch 8 oder 9, **dadurch gekennzeichnet, dass** der Mittelsteg (13) niedriger ist als die Laschenhöhe der Kettenglieder (2).

**11.** Anordnung nach einem der Ansprüche 8 bis 10, **dadurch gekennzeichnet, dass** der Rinnenboden (11) eine horizontale Bodenfläche (8') für die Auflage des sich bewegenden Kettenstranges (6) und eine zum Mittelsteg (13) geneigte Bodenfläche (8) für die Ablage des ruhenden Kettenstranges (5) aufweist.

**12.** Anordnung nach einem der Ansprüche 8 bis 11, **dadurch gekennzeichnet, dass** die Rinne als Strangformteil ausgebildet ist und an den Stirnflächen der Seitenwände (12) und des Mittelsteges (13) Zentrierungsöffnungen (14) für Steckverbindungselemente aufweist.
